# EUROPEAN PATENT SPECIFICATION

(11) **EP 2 550 242 B1**
(45) Date of publication and mention of the grant of the patent: **13.02.2019**
(21) Application number: 11721093.0
(22) Date of filing: 23.03.2011
(51) Int. Cl.: B01F 3/18, B01F 9/08, B01J 2/12, B01F 9/00, B01F 9/02, C04B 35/626

(54) **METHOD FOR PREPARING CERAMIC POWDER MATERIAL TO BE PRESSED**
VERFAHREN ZUR HERSTELLUNG EINES ZU PRESSENDEN KERAMIKPULVERMATERIALS
MÉTHODE DE PRÉPARATION DE POUDRE CÉRAMIQUE À PRESSER

(30) Priority: 23.03.2010 IT MO20100081
(43) Date of publication of application: 30.01.2013
(73) Proprietor: L.B. - Officine Meccaniche-S.p.A., 41042 Fiorano Modenese (MO) (IT)
(72) Inventor: BIGI, Ermes, I-41042 Spezzano di Fiorano Modenese (MO) (IT); BATTAGLIOLI, Lorenzo, I-46023 Gonzaga (MN) (IT); BIANCHINI, Alessandro, I-41126 Modena (MO) (IT)
(74) Representative: Crugnola, Pietro
(86) International application number: PCT/IB2011/000619
(87) International publication number: WO 2011/117717

(56) References cited:
- WO-A1-2008/116117
- DE-A1-102004 013 293
- GB-A- 859 460
- US-A1- 2008 173 739

## Description

The invention relates to a method for preparing ceramic powder material formed by pressing.

In particular, the invention relates to a method for treating ceramic powder material in such a manner that from pressing the ceramic powder material that is thus treated a semifinished ceramic product is obtained, such as, for example, an unfired ceramic tile.

In the context of the production of ceramic tiles, the term "porcelainized stoneware" identifies a mixture of ceramic raw materials, including clays, feldspar, kaolin and sand chosen from a recipe, which are prepared to be formed and subsequently pressed and fired to constitute the body of a ceramic tile having very low porosity, a very low ferrous oxide content, high resistance to frost, high resistance to acid attack and to alkali attack and great mechanical strength, if compared with ceramic tiles obtained from other mixtures of ceramic raw materials.

In general, in order to produce ceramic tiles it is necessary to prepare ceramic raw materials to obtain a ceramic powder that is suitable for being pressed, then compact the ceramic powder by pressing to obtain an unfired ceramic tile and then heat-treat the unfired ceramic tile to consolidate the compacted ceramic powder by firing.

Preparing the ceramic raw materials means that the latter are milled and mixed.

In order to produce porcelainized stoneware ceramic tiles, i.e. high-quality ceramic tiles, it is necessary to mill the selected ceramic raw materials, such as to obtain a fine powder consisting of solid particles having a high specific surface and thus high reactivity during firing - thus enabling a high degree of vitrification of the powders to be achieved - and carefully mixing the ceramic raw materials, such that the powder to be pressed is as homogenous as possible - this enabling uniformity of the ceramic tile after firing to be achieved.

The milling and mixing of ceramic raw materials of porcelainized stoneware traditionally occurs according to a wet procedure, which provides for milling the ceramic raw materials together with a high quantity of water in a mill provided with milling bodies. From milling a water suspension of solid particles is obtained, called slurry that is subsequently sprayed and dried in an atomiser to obtain an atomised powder that is suitable for being pressed. In particular, the atomised powder has a granular form, which enables the atomised powder to be rather fluid and suitable for supplying pressing apparatuses, and has a humidity percentage that is sufficient to enable the granules of atomised powder to be compacted by pressing, this humidity being, for example, comprised in the range between 4.5% and 5.5%.

The wet process is conducted through rather complex plants that involve high installation and running costs.

Further, the wet process entails great consumption of water resources, owing to the large quantity of water used in milling, and of energy resources, which are necessary during atomisation to evaporate excess water and obtain granules of atomised powder that is suitable for being formed by pressing.

The growing attention to the protection of the environment and to the reducing energy consumption has led manufacturers of ceramic tiles and manufacturers of plants for ceramic tiles to seek an alternative process to the wet process for treating and preparing ceramic raw materials.

In this context, a dry preparation process of the ceramic raw materials, which is already known for monoporous red and double-fired mixtures, has been tried on porcelainized stoneware.

This preparation process provides dry milling, i.e. without a substantial addition of water, of the ceramic raw materials in a milling apparatus, for example in a pendular mill or in a hammer mill, and of wetting the ceramic powder obtained from dry milling in a wetter up to a wetting value that is sufficient to enable compacting of the ceramic powder. For example, the ceramic powder leaving the wetter may have a humidity content of the order of 6%-7.5%.

One drawback of this dry process when applied to porcelainized stoneware is that the ceramic raw materials of porcelainized stoneware have to remain a long time inside the pendulum mill or the hammer mill to be reduced to a ceramic powder with a fineness that is comparable with what is obtainable with a wet process - this fineness being necessary to obtain a high degree of vitrification of the ceramic powder, with significant increase in the mechanical strength and impermeability of the fired tile.

This entails a long time to complete preparation of the ceramic powder and great wear to the milling apparatuses.

A further drawback is that the humidified ceramic powder, i.e. the ceramic powder leaving the wetter, being very fine and being humid, is substantially not able to flow. The movement by gravity of the humidified ceramic powder becomes very difficult with the risk that it is not even possible to extract this ceramic powder from storage containers such as, for example, silos or hoppers.

Following the poor or even non-existent flowability of the fine humidified ceramic powder, it is not possible to ensure constant and homogenous supplying of a pressing apparatus for forming ceramic tiles.

Still another drawback is that once a forming cavity has been loaded with the fine humidified ceramic powder, it is rather difficult to remove effectively the air present between the solid particles of the fine ceramic powder during pressing. Although a deaeration step is provided during pressing - which is necessary for any type of ceramic powder in whatever way it is prepared - in which the pressing apparatus stops exerting pressure on the fine humidified ceramic powder for a certain interval of time to enable the air to exit the forming cavity, air nevertheless remains trapped between the solid particles, the latter being very little flowable on one another. The air trapped between the solid particles is compressed during pressing, and when pressing is completed it expands, causing the detachment of portions of pressed ceramic materials by a body of the unfired ceramic tile. The latter, being devoid of a part thereof, is defective and thus has to be discarded.

Lastly, as porcelainized stoneware shrinks greatly during firing, if the forming cavity is not loaded in an homogeneous way with the fine humidified ceramic powder, the tile obtained by pressing will have irregular dimensions and a geometrical deformation after pressing due to differing shrinkage in various zones of the unfired ceramic tile. The ceramic tile that is thus obtained will have to be discarded because it is defective.

In order to try to overcome the drawbacks indicated above, a dry preparation method has been devised that differs from the dry process disclosed above through the fact that during humidification the ceramic powder obtained from dry milling is granulated.

Granulation occurs by supplying a quantity of nebulized water that is substantially greater than that supplied during simple humidification of the ceramic powder and by mixing the fine ceramic powder in a mixer with a substantially horizontal axis. For example, the humidity of the fine ceramic powder can be increased to 13%-16% during granulation. In this manner the water enveloping a solid particle of the fine ceramic powder acts as a binder for other solid particles with which the fine solid particle comes into contact during mixing and enables a grain nucleus to be formed, which grows in dimension inside the mixer by agglomerating further solid particles with which it comes into contact.

The grain of granulated powder obtained from granulation has a roundish shape similar to that of the granule of the atomised powder.

After granulation, there is provided a drying step, for example in a fluid bed dryer, to bring the humidity of the granulated powder to a humidity value that is suitable for the pressing step, for example comprised between 5.5% and 6.5%. Excessive humidity of the powder to be pressed in fact causes that the powder adheres to walls of the forming cavity, thus dirtying the forming cavity and compromising subsequent loading or even that the pressed tile cannot be extracted from the forming cavity.

After drying, the granulated powder has good flowability compared with the merely humidified ceramic powder and can be moved by plants that are substantially similar to those used in the conveying and handling of the atomised powder.

One drawback of the last method of dry preparation disclosed is that in order to obtain granulated powder that does not have only a shape but also granulometric distribution that is similar to the atomised powder, it is necessary to provide rather a complex plant downstream of the mixer, comprising screens, micronising mills for shattering the granules exceeding a given size, a line for recovering material that is too fine, which is thus costly both in terms of installation and management.

Further, the mixer has rather limited productivity, linked to the time required for the growth of the grains of the granulated powder.

Further, the granulated powder obtained has a bulk density that is much greater than the granule of atomised powder, which, as it is obtained through evaporation of the water from a drop of liquid, has a hollow interior that enables it to "collapse" during pressing, thus promoting intergranular compacting. This does not occur with the grain obtained by growth around a nucleus, which does not possess a similar hollow. The greater balk density of the granulated and dried powder reduces the shrinkage during firing of the ceramic powders. Nevertheless, for the same pressing pressure, the mechanical resistance of the unfired ceramic tile obtained from compacting granulated powder is less than that obtained by pressing atomised powder - mechanical resistance that has to enable the unfired ceramic tile to be handled and conveyed without breaking. It is thus necessary to increase the pressing pressure to be applied to the granulated powder to obtain an unfired ceramic tile with the same mechanical resistance of an unfired ceramic tile made of atomised powder.

Further, the granulated powder confers considerable roughness on the unfired ceramic tile, this meaning that during glazing of the unfired ceramic tile a greater quantity of slip or glaze is required than with an unfired ceramic tile obtained from atomised powder to obtain the same "smooth" aesthetic effect.

Lastly, the drawbacks relating to milling and wear time of the aforementioned dry milling apparatuses remain even if there is granulation.

WO2008/116117A1 discloses a method for producing granulated kaolin compositions comprising mixing at least one kaolin slurry with at least one predispersed spray dried kaolin and agglomerating the resulting mixture. The granulated kaolin composition has a moisture content ranging from about 12% to about 23% by weight relative to the total weight of the composition and an average granule size of greater than about 10 mesh.

DE102004013293A1 discloses a method for preparation of a granular material which is suitable for static or isostatic pressing of ceramic products such as tile, roof tiles and chimney pipes. A ground raw material having 90% of the particle size of less than 63 micrometres is introduced into a mixer having a mixer tool which is turned at a high number of revolutions. Water is added under pressure into the mix for the 10%-18% of the volume of the introduced material to form granulates which are then delivered and dried. Compressed air is introduced in counter-current to the feed line of the material. The formed granulates before the delivery and the drying process stay in the mixer at a low number of revolution of the mixer tool.

GB859460A discloses a mixing and granulating apparatus comprising a dish rotatable about its central axis, which axis is of variable inclination, and mixing tools which rotate about an axis parallel to the axis of rotation of the dish.

One object of the invention is to improve prior-art methods for preparing ceramic powder material that is pressed.

Another object is to provide a method for preparing ceramic powder material which enables a high-quality ceramic tile to be obtained, such as, for example, a porcelainized stoneware tile, starting from dry-milled ceramic powder.

A further object is to provide a method for preparing ceramic powder material that can be implemented by structurally simple plants.

A still further object is to provide a method for preparing ceramic powder material obtained from a dry milling that enables the thus prepared ceramic powder material to be formed into a pressing apparatus of known type, by using pressing pressure that is slightly greater than that used in forming atomised powder and anyway less than the pressing pressure that is necessary for granulated powder.

Another object is to obtain a method for preparing ceramic powder material having reduced energetic costs compared with a wet preparation method.

Still another object is to obtain a method for preparing ceramic powder material having reduced energy costs compared with a dry preparation method in which the ceramic powder obtained from dry milling is granulated.

According to the invention a method is provided for preparing ceramic powder material to be pressed to form a ceramic tile by pressing as defined by claim 1.

Owing to the invention it is possible to obtain a granulated ceramic powder the granules of which have dimensions that are already suitable for supplying a forming press.

During rolling, the ceramic powder material is mixed and the dimension of the agglomerates grows for subsequent contacts between the solid particles of the ceramic powder material with formation of granules.

The mechanical action applied, acts in conflict with the growth of the agglomerates, not allowing the granules to grow to reach the dimensions, for example, of the granules of granulated powder with the technique of known type that granulates the dry-milled powder.

For this reason, the granules of the ceramic powder that are obtained by the method according to the invention are hereinafter called "microgranules" and the ceramic powder obtained by mixing the ceramic powder material is hereinafter called "microgranulated" ceramic powder.

By controlling the rolling and the mechanical action applied to the ceramic powder material, the disaggregation of the agglomerates is controlled. The control of the disaggregation enables the maximum dimension of the granules being formed to be limited.

By limiting the maximum dimension of the granules being formed during mixing or rolling, not only the dimension of the microgranules but also the granulometric distribution of the microgranules of the microgranulated ceramic powder obtained are such that the microgranulated ceramic powder can be formed in a ceramic press at a pressing pressure that is a little higher than the pressure applied to the prior-art atomised powder.

It is thus no longer necessary to provide a complex screening and milling plant after mixing in order to select the granules within a certain dimensional interval.

This results in a reduction in the costs of preparing the ceramic powder material for pressing.

In particular, after the microgranules of the microgranulated ceramic powder have been produced, the microgranules obtained are dried in such a manner as to reduce the humidity of the microgranulated ceramic powder to values that are suitable for pressing.

It has been observed that, after drying, the microgranulated powder obtained according to the method of the invention has acquired a sufficient degree of flowability to enable the microgranulated powder to be conveyed and to supply a forming press, in particular for ceramic tiles.

This enables already existing ceramic powder material conveying plants to be used.

By controlling the disaggregation of the agglomerates being formed it is possible to obtain a microgranulated ceramic powder that has flowability, granulometric distribution and humidity features that enable the microgranulated ceramic powder to supply a ceramic tile forming press without incurring the drawbacks disclosed with reference to the humidified ceramic powder. Further, the microgranulated powder leaving the mixer does not require the same screening in the case of granulated powder, this increasing the productivity of the mixer and enabling a significantly simplified plant structure to be adopted.

After drying, a microgranulated ceramic powder is thus obtained to be pressed and to form a ceramic tile.

The invention can be better understood and implemented with reference to the attached drawing that illustrated an embodiment thereof by way of non-limiting example, in which:
Figure 1 shows a comparative graph of granulometric distributions of ceramic powders prepared according to preparation methods that are different from one another;
Figure 2 shows a comparative table of the granulometry values of the ceramic powder materials illustrated in the graph in Figure 1;
Figure 3 is a schematic side view of a mixing apparatus of known type;
Figure 4 is a schematic cross section taken along the plane IV-IV of the mixing apparatus in Figure 3;
Figure 5 is a detail of Figure 4 illustrating granules being formed inside the mixing apparatus;
Figure 6 is a comparative table of ceramic powder materials that differ on the basis of the initial recipe and are prepared with a method according to the invention;
Figure 7 is a perspective view of an apparatus measuring flowability;
Figure 8 is a plan view of the apparatus in Figure 7;
Figure 9 to 11 are measurements made on different types of material with the apparatus in Figure 7 in a frontal view.

The method according to the invention prepares a ceramic powder material to the pressing thereof. The ceramic powder material can be a ceramic powder used in the production of ceramic tiles and in particular for loading a forming cavity of a pressing apparatus to form ceramic tiles.

The ceramic powder material is chosen in such a manner that a ceramic tile obtained from firing a unfired ceramic tile formed by pressing the ceramic powder material - after preparation of the latter - has water absorption that is less than or the same as 3%, said water absorption being measured in accordance with standard ISO 10545-3. In particular, the ceramic powder material comprises selected ceramic powders that are suitable for constituting the body of a ceramic tile belonging to the subclass BIa defined by standard ISO 13006, i.e. with water absorption that is less than or the same as 0.5%. For example, the ceramic powder material is porcelainized stoneware powder.

The preparation method according to the invention is a "dry" preparation method, i.e. without a substantial addition of water if compared with wet preparation methods of known type, in which an atomised powder is obtained.

The preparation method according to the invention is directed to prepare a ceramic powder material to the pressing thereof, the ceramic powder material being obtained by dry milling of ceramic raw materials. The ceramic raw materials are chosen on the basis of a preset recipe. The dry milling occurs in a known apparatus, such as, for example, a roller mill. The maximum dimension of the particles of the initial ceramic powder material is less than 75 µm (micrometres). The milling residue of the initial ceramic powder material is thus near the milling residue of an atomised powder.

The initial ceramic powder material is thus a very fine powder, that is not very flowable and not suitable for being pressed in a pressing apparatus of known type at a pressing pressure that is the same as or little different from that generally used for pressing atomised powder. It is thus necessary for treating the initial ceramic powder material to make it suitable for pressing.

Preparing the ceramic powder material comprises the step of wetting the ceramic powder material up to a humidity value that is substantially greater than a compacting humidity value that is necessary for compacting by pressing ceramic powder material.

The compacting humidity value that is necessary for compacting the ceramic powder material by pressing is intended as an interval of compacting humidity values within which the ceramic powder material is considered to be pressible, i.e. has plasticity that enables an unfired ceramic product to be obtained that is formed by pressing. If the ceramic powder material has humidity that is less than the interval of compacting humidity values, forming by compacting does not occur, as the water is not sufficient to obtain the cohesion of the solid particles of the ceramic powder material. Or, a pressed tile is obtained that is not sufficiently cohesive and resistant, that breaks during extraction from the mould in which it is formed. If the given ceramic powder material has humidity that is greater than the compacting interval, the adhesion of the solid particles of the ceramic powder material to walls of the forming cavity is excessive, this causing difficulties in extracting the pressed tile and loading defects of the forming cavity in the subsequent pressing cycle.

The compacting humidity value that is necessary for compacting the ceramic powder material by pressing refers to reference pressing conditions, such as those that occur in apparatuses of known type to form by pressing ceramic tiles of atomised powder. The pressing pressure of atomised powder is generally comprised between 300 kg/cm² and 600 kg/cm², and usually comprised between 400 kg/cm² to 450 kg/cm².

With fixed pressing conditions, the compacting humidity value depends mainly on the type of initial ceramic powder material, i.e. on the recipe with which the ceramic raw materials are chosen that are then dry-milled, in particular the quantity and type of clay.

It has been ascertained experimentally that the compacting humidity value that is necessary for compacting by pressing is slightly influenced by the average dimension of the particles and of the granulometric distribution of the ceramic powder material to be pressed.

This means that, for a given recipe and to fixed pressing conditions, the compacting humidity value depends on the manner with which the ceramic powder material is prepared, as the preparation influences the granulometric distribution of the ceramic powder material, although less than the influence that the recipe has. In particular, for fixed pressing conditions and for a fixed recipe, the compacting humidity value of a ceramic powder material obtained from a wet milling process and then atomised is slightly less than the compacting humidity value of a ceramic powder material obtained from dry milling of ceramic raw materials. The compacting humidity value that is necessary for compacting an atomised powder is from a few tenths of a percentage point to 2 percentage points less than the compacting humidity value that is necessary for compacting powders having a greater bulk density, such as those obtained by dry milling. For example, if for a given porcelainized stoneware recipe the compacting humidity value that is necessary for compacting that porcelainized stoneware in the form of atomised powder is comprised between 4.5% and 5.5%, the compacting humidity value that is necessary for compacting the porcelainized stoneware in the form of powder obtained by dry milling and then granulated is comprised between 5.5% and 6.5%. In the case of dry-milled and simply humidified powder - although not industrially usable because of the drawbacks discussed above - the compacting humidity value would be comprised between 6% and 7.5%.

The compacting humidity value that is necessary for compacting the ceramic powder material by pressing to which reference is made in the method according to the invention is the one that relates to a ceramic powder material obtained by dry milling of ceramic raw materials.

At fixed pressing conditions, as the recipe varies, the compacting humidity value - i.e. the interval of compacting humidity values - that is necessary for compacting the ceramic powder material by pressing is comprised between 3% and 8%.

At fixed pressing conditions and considering a ceramic powder material obtained by dry milling of ceramic raw materials, with each recipe a compacting humidity value is associable that is necessary for compacting the ceramic powder material by pressing, which is naturally an ideal value and is known to those skilled in forming ceramic powder material.

For each preset recipe and at the preset pressing conditions, by forming by pressing the ceramic powder material having humidity that is the same as the compacting humidity value, a sufficiently high flexural strength of the unfired ceramic tile is obtained to enable the unfired ceramic tile to be handled and conveyed by conveying devices, such as, for example, a pair of belts, without breaking. For example, the flexural strength for conveying an unfired ceramic tile with known conveying devices without the risk that the unfired ceramic tile is damaged must be at least 20 kg/cm² 2 N/mm²), measured according to standard ISO 10545-4 on the pressed piece and subsequent to drying thereof.

The effective humidity of the ceramic powder used during pressing to form an unfired ceramic tile can naturally vary within preset tolerance limits with respect to the desired compacting humidity value.

Preparing the ceramic powder material further provides the step of mixing the ceramic powder material such as to obtain agglomerates of the ceramic powder material and apply, during mixing, a mechanical action to disaggregate at least one part of the agglomerates in such a manner as to limit a maximum dimension of said granules forming from said agglomerates.

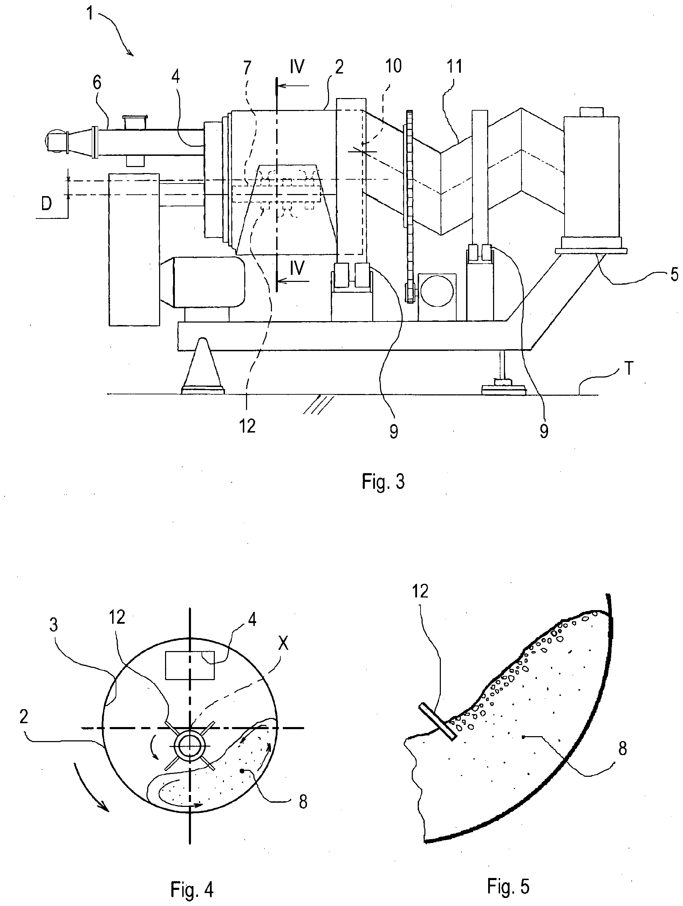

Mixing occurs in a mixing apparatus of known type, for example of the type illustrated in Figure 3 and 4.

The mixing apparatus 1 comprises a casing 2 inside which an agglomeration chamber 3 is provided that has a cylindrical shape and is rotatable around its longitudinal axis X. The casing is rotatingly supported by rollers 9.

The casing 2 is provided with an inlet 4, from which the ceramic powder material enters that is obtained from dry milling of the ceramic raw materials, and an outlet 5 from which the microgranulated ceramic powder exits. A supplying device 6, such as, for example, a feed screw, is mounted fixed at the inlet 4 to supply the mixing apparatus 1, with the ceramic powder material.

Inside the agglomeration chamber 3 a disaggregating element or rotor 7 is fitted, arranged at a certain distance D from the longitudinal axis X and provided with a series of radial stirring elements 12.

The casing 2, by rotating, produces a swirling motion of the content of the agglomeration chamber 3, this content being indicated overall with 8. The rotation of the casing 2 induces rolling of the ceramic powder material. The rotor 7 rotates in the same direction as the casing 2 but can also rotate in an opposite direction.

At one end of the agglomeration chamber 3 opposite the inlet 4 there is an opening 10 leading into a passage chamber 11 having the shape of a zigzag connected to the outlet 5. The inlet 4 and the outlet 5 are fixed during rotation of the casing 2.

An adjusting device that is not shown enables the tilt of the longitudinal axis X to be varied by a few degrees with respect to a horizontal plane T. This enables the wait time of the ceramic powder material inside the mixing apparatus 1 to be adjusted. In particular, with reference to Figure 3 the longitudinal axis X is tilted towards the outlet 5, i.e. downwards.

The mechanical action applied to the contents 8 is generated during operation of the mixing apparatus 1 according to operating parameters indicated below.

The mixing apparatus 1 is arranged for operating continuously, i.e. to be supplied continuously with the ceramic powder material to be treated and to supply microgranulated ceramic powder to the outlet 5 continuously. Rolling and the mechanical action occur in such a manner as to control the disaggregation of at least a part of the agglomerates to obtain a desired disaggregation and limit a maximum size of granules forming from the agglomerates.

The agglomeration chamber 3 is rotated at a speed comprised between 15 rpm and 25 rpm.

The rotor 7 promotes the mechanical action that disaggregates the agglomerates being formed to limit the maximum dimension of the granules. The rotor 7 is rotated at a speed that is not less than 1500 rpm. In particular, the rotor is rotated between about 1800 and 2000 rpm.

Once the ceramic powder material is introduced into the rotating agglomeration chamber 3, a humidifying fluid, in particular water is sprayed or nebulised inside the agglomeration chamber 3. The water is injected through nozzles provided along the rotor 7 at a pressure that is not less than 5 bar.

The quantity of water that is nebulised inside the agglomeration chamber 3 depends on the initial humidity of the initial ceramic powder material and on the recipe thereof.

Generally, the initial ceramic powder material with which the mixing apparatus 1 is supplied has a known humidity, so the quantity of water supplied to the contents 8 is such that the humidity reached by the microgranulated ceramic powder, at the outlet 5, is substantially greater than the compacting humidity value relating to the given recipe of the initial ceramic powder material.

For example, considering that the compacting humidity value necessary for pressing ceramic powders of dry-milled and granulated porcelainized stoneware is comprised between 5.5% and 6.5% humidity, the contents 8 and thus the microgranulated ceramic porcelainized stoneware powder at the outlet 5 will have a humidity comprised between 8.5% and 11.5%. The humidity of the ceramic powder material in the mixing apparatus 1 is increased from 2 to 6 percentage points compared to the compacting humidity value of the porcelainized stoneware powder.

It should be noted that the technician skilled in forming ceramic tiles recognises that an increase in humidity of even only 2% - which could at first sight not seem substantial - compared with the compacting humidity value provided for a given recipe is sufficient to make the ceramic powder material unsuitable for being pressed without incurring the known drawbacks generated in the case of excessive humidity, such as the dirtying of the forming cavity and the difficulty of extracting the pressed piece from the forming cavity.

In all cases, humidity reached by the microgranulated ceramic powder in the mixing apparatus 1 is not greater than 11.5%.

The microgranulated ceramic powder obtained from mixing in the agglomeration chamber 3 thus has a humidity value that is greater than the humidity necessary for the forming thereof - the compacting humidity value - and less than the humidity value reached in the granulation of the granulated powder prepared according to the granulation method of known type, in which the humidity is comprised between 13% and 16%.

The humidity of the microgranulated powder is measured by taking successive samples coming from the outlet 5 and using a known device, such as, for example a thermal balance.

The formation of agglomerates is promoted by the rotation of the agglomeration chamber 3. Simultaneously, the breakage or disaggregation of the already formed agglomerates is controlled by the rotation of the rotor 7.

As Figure 5 shows, the granules that are formed by agglomeration of the original fine ceramic powder and have a greater dimension than the remaining ceramic powder tend to be arranged in a surface zone of the content 8 during mixing. The radial stirring elements 12 act on the ceramic powder arranged in the surface zone of the content thus promoting the disaggregation of the granules of greater dimension.

The effect of the mechanical action provided in the method according to the invention is that of obtaining "microgranules", i.e. agglomerate nucleuses that have an irregular shape and have a smaller dimension if compared with the granules of atomised powder or with the granules of the granulated powder obtained from a process of known type of granulating dry-milled ceramic raw materials. Part of the formed microgranules may have an almost roundish shape.

In the agglomeration chamber 3 the humidification and mixing of the ceramic powder material occur and the consequent formation of agglomerate nucleuses and disaggregation of excessively grown granules. In the passage chamber 11 the humidity of the microgranulated ceramic powder already formed in the agglomeration chamber 3 is homogenised.

Mixing and applying the mechanical action occur for a set time that is sufficient to obtain a certain granulometric distribution and a desired humidity of said ceramic powder material.

The microgranulated ceramic powder can also be obtained in mixing apparatuses different from the one disclosed here, for example from mixing apparatuses in which the passage chamber 11 is not present and the outlet 5 is connected to the opening 10 or substantially coincides with the opening 10.

As the humidity of the microgranulated ceramic powder leaving the mixing apparatus 1 is higher than the compacting humidity value that is necessary for pressing the ceramic powder material associable with said recipe of the microgranulated ceramic powder, there is provided to eliminate the exceeding humidity, to return the humidity of the microgranulated ceramic powder near to the compacting humidity value. The humidity value (or interval) at which the microgranulated ceramic powder is "pressible" is substantially the same as the known compacting humidity value (or interval) and relative, for the same recipe to the granulated powder.

This occurs by drying the microgranulated ceramic powder, for example in a fluid-bed dryer of known type. In this manner, the microgranules are dried to a humidity value that is substantially the same as the compacting humidity value that is suitable for pressing the microgranulated ceramic powder.

From the drying, a microgranulated ceramic powder is obtained, the microgranules of which comprise a more humid nucleus surrounded by solid particles of lesser humidity. The "less humid" solid particles that surround the more humid nucleus confer on the microgranules a flowability that is sufficient to enable the microgranulated ceramic powder that is thus prepared to be conveyed easily and to be able to supply the pressing apparatus.

The microgranulated ceramic powder leaving the dryer is thus rather fluid and can be used directly to form a semiprocessed ceramic product such as an unfired ceramic tile.

The pressing pressure required to form an unfired ceramic tile from the microgranulated powder leaving the dryer is slighter greater than that, for the same recipe, would be theoretically necessary for the corresponding atomised powder. The less humid solid particles form a tough layer that requires extra force to enable each microgranules to be deformed until it yields and compacts with the adjacent microgranules.

Nevertheless, at the same humidity conditions, the microgranulated ceramic powder requires less pressing pressure than that is actually necessary to press the granulated powder.

By controlling the speeds disclosed above with reference to the agglomeration chamber 3 and the rotor 7, it is possible to control the disaggregation of the agglomerates being formed in such a manner as to produce a certain agglomeration and simultaneously a certain disaggregation of the contents 8 of the mixer.

Surprisingly, the microgranulated ceramic powder obtained according to the invention and subsequently dried has flowability that is only slightly less than that of the atomised material.

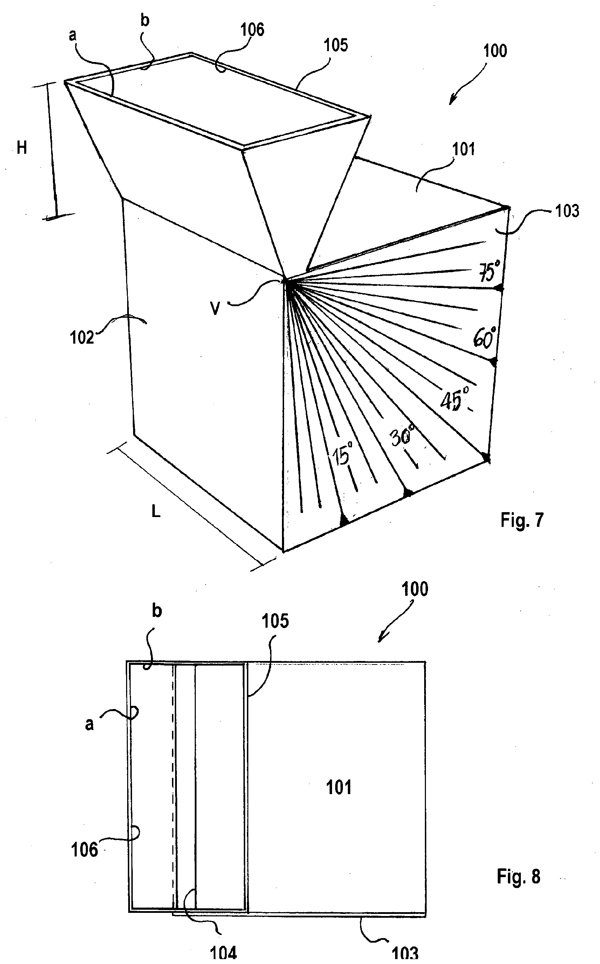

To obtain a simple and immediate measurement of the flowability of the microgranulated ceramic powder, an apparatus 100 has been adopted like that shown in Figure 7.

The apparatus 100 comprises a hollow cubic body having an external side L of 125 mm and an internal side of 120 mm. The thickness of the walls of the cubic body is 5 mm.

On the upper face 101 a rectangular opening 104 is obtained, shown in Figure 8, that extends along an entire side of the cubic body and measures 120 mm on the long side and 10 mm on the lesser side. From the rectangular opening 104 a hopper 105 projects above that is 55 mm high H and has an inlet mouth 106 with internal dimensions a=120 mm and b=60 mm. The thickness of the walls of the hopper is 5 mm. The walls of the hopper 105 that end with side b lie on the same plane as opposite walls of the cubic body, i.e. they are vertical. The hopper 105 has a cross section with the form of an upturned isosceles triangle, i.e. with a base that is greater at the inlet mouth 106 and a base that is less at the rectangular opening 104.

Except for the front face 103, the cubic body and the hopper 105 are made of the same material, for example of pressed cardboard that is 5 mm thick.

The front face 103, which is attached to the cubic body by glue, is of transparent plastics to enable the user to see the powders contained in the apparatus 100. On the front face 103 there is a graduated scale of the angles that the powder inserted into the apparatus 100 forms with respect to the side wall 102, which is assumed to be a reference wall.

A volume of powder corresponding to the volume of the hopper 105 is poured into the hopper 106 and made to flow inside the apparatus 100. The powder tends to be arranged in a heap having a section like a rectangled triangle, the flow thereof being limited by the side wall 102. Through the graduated scale a measurement of the angle is obtained that the free side of the heap forms with the reference wall 102, and which will afterwards be indicated as the heap angle.

The heap angle is thus defined by the tilt assumed by the microgranulated ceramic powder with respect to a vertical wall, when placed against said vertical wall and a horizontal wall adjacent to said vertical wall.

The heap angle measured with the apparatus 100 is as much greater as the greater is the flowability of the powder.

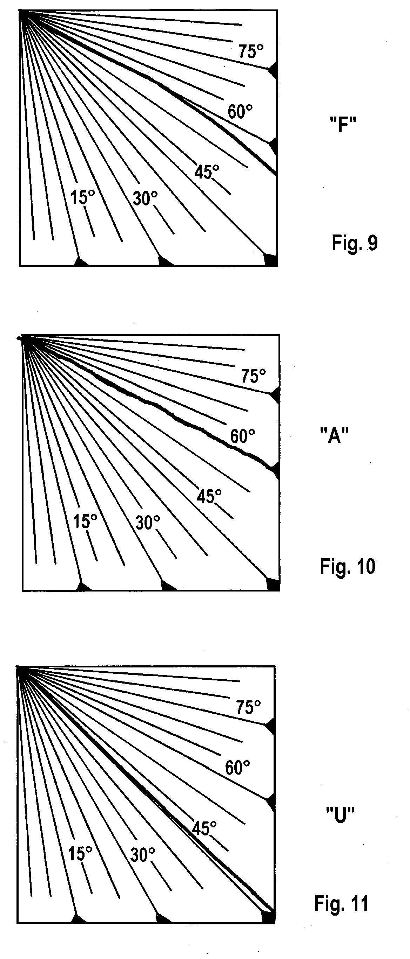

The angle of the heap of a microgranulated ceramic powder, obtained by imposing a certain disaggregation during mixing according to what disclosed above, with the apparatus 100 is comprised between 55° and 60°, as Figure 9 shows. Figure 10 shows that the angle of a heap of atomised powder is 60°. The same value is obtained for a granulated powder according to the granulating technique of known type.

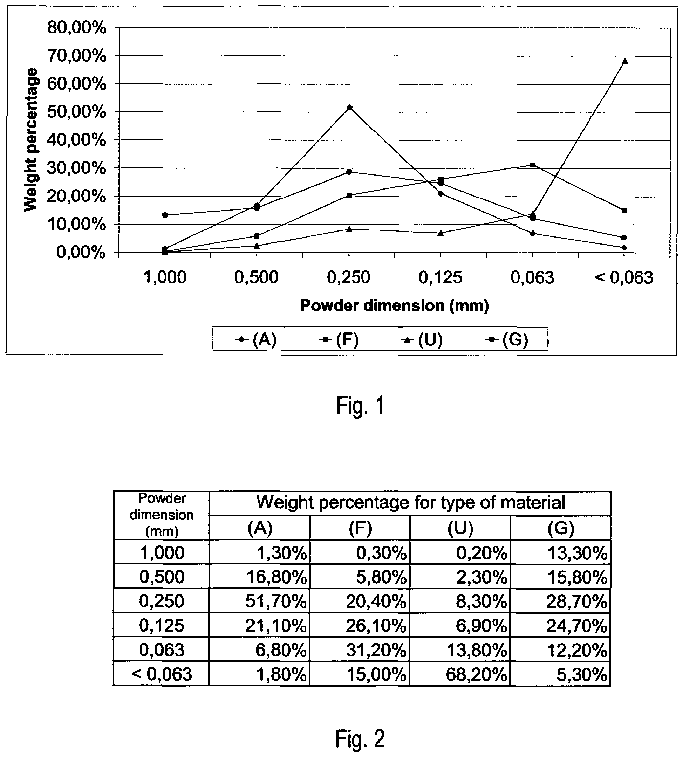

Figure 11 shows that the heap angle of a humidified powder is 45°. Figure 1 and Figure 2 show granulometric curves and respective granulometric intervals of a ceramic powder material prepared according to preparation methods that are different from one another for the same recipe.

In Figures 1 and 2, "A" indicates a porcelainized stoneware atomised powder obtained according to a traditional wet-preparation method and having a compacting humidity value comprised between 4.5% and 5.5%; "U" indicates a porcelainized stoneware powder obtained from dry milling of ceramic raw materials and humidified to a humidity value that is substantially the same as the compacting humidity value necessary for compacting by pressing the ceramic powder material, this compacting humidity value being, for example comprised between 6% and 7.5%; "G" indicates a porcelainized stoneware powder obtained from dry milling of ceramic raw materials and granulated by humidifying the ceramic powder material to a humidity value that is substantially greater than the compacting humidity value by pressing of this ceramic powder material, i.e. up to 16%, and drying the ceramic powder material to take the humidity up to the compacting humidity value, i.e. between 5.5% and 6.5%; "F" indicates a porcelainized stoneware powder prepared with a preparation method according to the invention, in which ceramic powder materials obtained from dry-milled ceramic raw materials have been humidified to a humidity value that is substantially greater than the compacting humidity value by pressing of this ceramic powder material, i.e. up to 11% and drying the ceramic powder material to take the humidity up to the compacting humidity value, i.e. between 5.5% and 6.5%. The porcelainized stoneware recipe is the same for the four powders "A", "U", "G" and "F".

The granulometric distribution of the four powders indicated in the graph in Figure 1 and in the table in Figure 2 is obtained for each powder by mechanical sieving of 1 kg (kilogram) of powder in a vibrating sieve, i.e. a device comprising a column of standardised sieves according to standard DIN 4188 with a section of the meshes decreasing from above to below in a geometric progression from 1 mm (millimetre) to 63 µm (micrometres). The vibrating sieve vibrates the column of sieves at a preset frequency and for a preset time. The fraction in weight of powder is thus measured that does not transverse and remains on each single sieve having meshes of that given net space. The sieves used thus have meshes with a net space measuring 1000 µm, 500 µm, 250 µm, 125 µm and 63 µm respectively.

As shown in Figure 1 and in Figure 2, the granulometric curve of the microgranulated ceramic powder "F" has a peak around 63 µm.

The microgranulated ceramic powder "F" has a large percentage of microgranules, 70.70%, having dimension greater than 63 µm and less or the same as 500 µm. The finest fraction is 15%. The microgranulated ceramic powder "F" thus has rather a uniform granulometric distribution. In fact, the quantitative fraction of ceramic material that prevails on the other fractions is that with a dimension comprised between 63 µm and 125 µm - greater than 63 µm and less than or the same as 125 µm - nevertheless, it represents only one third of the granulometric distribution. A fraction of one fourth is represented by microgranules with a dimension comprised between 125 µm and 250 µm - greater than 125 µm and less than or the same as 250 µm -, a fraction of one fifth is that of microgranules with a dimension comprised between 250 µm and 500 µm - greater than 250 µm and less than or the same as 500 µm - and a fraction of one sixth is given by the microgranules of smaller dimensions, less or the same as 63 µm.

A large part of the humidified powder "U", 68.20%, consists of particles that are much finer than the powder "F", these particles having a dimension that is less than or the same as 63 µm.

A large part of the atomised powder "A", 89.60%, consists of granules with greater dimensions than the microgranulated ceramic powder "F", having a dimension that is greater than 125 µm and less than or the same as 1000 µm. Also the granulated ceramic powder "G" consists of granules with greater dimensions than the microgranulated ceramic powder "F", in fact 69.20% of granules have dimensions that are greater than 125 µm and less than or the same as 1000 µm.

The granulometric distribution of the microgranulated ceramic powder is moved to finer fractions than the granulated powder or the atomised powder. This is due to the application of the mechanical action of the rotor 7, which breaks the granules of a great dimension and acts in combination with the mixing implemented in the agglomeration chamber 3, which on the other hand promotes the growth of the agglomerates.

It has been ascertained experimentally that the granulometric distribution of the microgranulated ceramic powder, although it is rather different from that of the atomised powder, is nevertheless suitable for being used in a pressing apparatus, without it being necessary to separate any fraction after drying.

Further, after drying, the microgranulated ceramic powder has sufficient flowability to be able to be conveyed and used in known loading devices for loading a forming cavity in pressing apparatuses.

In particular, as disclosed above, the flowability of the microgranulated ceramic powder "F" is only just less than the flowability of the atomised powder "A".

On the contrary, as the humidified powder "U" is not sufficiently flowable it is not suitable for being used to supply a pressing apparatus, and if it is used it has the known drawbacks of failed compacting due to the difficult deaeration during pressing thereof. This is due to the high percentage of fine particles, of dimensions that are less than or the same as 63 µm.

The granulated powder "G" is rather flowable instead and the flowability thereof is not very different from the atomised powder "A", which is the most fluid of the four powders compared here.

Nevertheless, the granulated powder "G", like any other granulated powder according to a granulation method of known type, show non-negligible separating phenomena, for example during conveying or storage. The larger fractions separate from the finer fractions, this not permitting uniform distribution of the granulated powder during loading of the forming cavity. The granulometric distribution influences compacting and thus vitrification of the unfired ceramic tile once it is fired. As the granulometric distribution of the granulated powder is not constant between one pressing cycle and the next pressing cycle, it is not possible to guarantee ceramic tiles having constant physical and therefore quality features.

In order to use the granulated powder "G" to form unfired ceramic tiles, it is necessary to screen the fraction of greater granulated powder, that has a dimension greater than 1000 µm and is more flowable, and further to limit the quantity of finer granulated powder, having dimension that is less than or the same as 125 µm, being less flowable than the rest of the granulated powder. In other words, the granulometric distribution of the granulated powder must be made nearer that of the atomised powder. This entails the high plant and preparation costs that were already discussed in relation to the prior art.

It has been experimentally observed that the microgranulated ceramic powder "F" has granules that are smaller and more irregularly shaped than those of the atomised powder "A" or the granulated powder "G", nevertheless, it shows sufficient flowability to be easily conveyed and to be able to supply a pressing apparatus. Compared with the humidified powder "U", the microgranulated powder "F" comprises microgranules i.e. agglomerates of solid particles obtained by growing around a nucleus, which, although being of variable shape, have flowability that is greater than that of the humidified powder "U", which does not comprise agglomerates of solid particles instead.

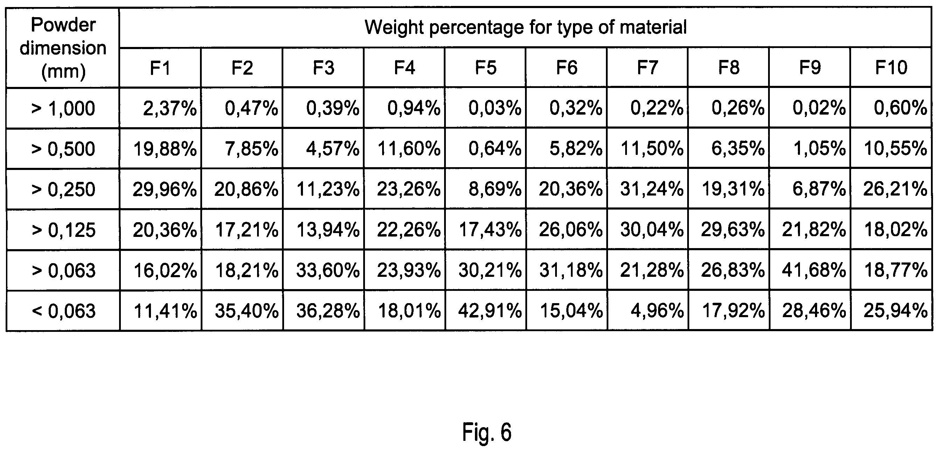

Figure 6 shows a table that is similar to that of Figure 1 in which there are reported the granulometric fractions of ceramic powder materials F1, F2, ..., F10 which have been prepared in a mixing apparatus of the type illustrated in Figure 1 driven as disclosed above and which differ from one another on the basis of the recipe. The ceramic powder materials F1, F2, ..., F10 have been prepared starting from dry-milled ceramic raw materials, having a maximum dimension of less or the same as 75 µm.

The initial ceramic powder materials have been humidified up to a humidity value that is greater than the compacting humidity value - which refers to the granulated powder and is variable on the basis of the recipe. The humidity value reached by the microgranulated ceramic powder is comprised between 10% and 11%. After micro granulation, each microgranulated powder has been dried to reach a humidity value that is substantially the same as the compacting humidity value of the given recipe. According to the recipe, the compacting humidity value of the ceramic powder material F1, F2, ..., F10 varies between 6% and 7.8%.

The table in Figure 6 shows that the fraction of granules greater than 63 µm and less than or the same as 125 µm is decidedly greater in the microgranulated powder F1, F2, ...., F10 with respect to a ceramic powder obtained with other preparation methods (see Figure 1) and is variable, on the basis of the type of recipe, between 16% and 41.7%. On the basis of the type of recipe, the fraction greater than 125 µm and less than or the same as 250 µm varies between 13.9% and 30.0%, the fraction greater than 250 µm and less than or the same as 500 µm varies between 6.9% and 31.2%, the fraction greater than 500 µm and less than or the same as 1000 µm varies between 0.6% and 19.9%. Except for the ceramic material F1, in all the other microgranulated ceramic powder materials the fraction of material having dimension greater than 1000 µm does not exceed 1%.

The finer fraction, less or the same as 65 µm, whilst being able to reach 42.9% as in the case of F5, nevertheless does not reach 50% of the materials, as occurs in the case of the humidified ceramic powder (68.2% in Figure 1).

With the method according to the invention it is possible to limit the maximum dimension of the granules and thus obtain a granulometric distribution of the ceramic powder material in such a manner that the latter can have a significant fraction of granules of dimensions comprised between 63 µm and 125 µm - greater than 63 µm and less than or the same as 125 µm. This enables good loading of the forming cavity to be obtained and thus good compacting of the ceramic powder material during pressing.

The microgranulated ceramic powder obtained by the method according to the invention has greater sinterisation during firing than a powder granulated by the known method, with a consequent decrease in porosity and an increase in resistance to flexion of the fired piece.

The pressed piece, i.e. the unfired ceramic tile obtained from microgranulated ceramic powder, has greater bulk density than an unfired ceramic tile obtained from granulated powder of known type, this being an indication of better compacting.

The unfired ceramic tile, i.e. the tile obtained from pressing the microgranulated ceramic powder prepared according to the invention, has a greater mechanical resistance than an unfired ceramic tile obtained from a granulated powder according to the prior art.

Further, an unfired ceramic tile obtained by pressing the microgranulated ceramic powder has a "smoother" surface, i.e. in which the separating surfaces between one microgranule and the other are not visible to the naked eye even after firing, unlike what happens in the case of ceramic tiles obtained from granulated powder according to the prior art. Absorption of slip or glaze is not substantially altered compared with an unfired ceramic tile made of atomised powder.

As it is desired to obtain with the microgranulated ceramic powder a ceramic tile having substantially the same quality features as a ceramic tile obtained from a granulated powder in a known manner, such as, for example mechanical resistance, water absorption, the bulk density, the preparation method according to the invention enable such features of the ceramic tile to be obtained starting with dry-milled ceramic raw materials with a lower degree of fineness, i.e. with a higher milling residue. Being able to use "less milled" ceramic raw materials means greater productivity of the ceramic raw materials milling plant, with a consequent decrease in energy costs, maintenance costs and labour costs, per tonne of microgranulated ceramic powder produced.

Further, as the microgranulated ceramic powder leaving the dryer is already ready for pressing, in terms of humidity, flowability, granule dimension, granulometric distribution, the preparation plant is extremely simplified compared with a plant for preparing a granulated powder of known type.

The difficulties of conveying powder prepared simply by humidifying a very fine ceramic powder material are overcome by the method according to the invention.

The preparation method of the ceramic powder material according to the invention enables ceramic tiles of high quality to be produced for example in terms of water absorption, leading to a significant energy saving if compared with the traditional wet-preparation method or the dry preparation method in which granulation is arranged.

## Claims

1. Method for forming a ceramic tile by pressing a prepared ceramic powder material in a pressing apparatus, said ceramic powder material being obtained by dry milling of ceramic raw materials, the maximum dimension of the particles of said initial ceramic powder material being less than 75 µm, comprising the steps of:
- wetting said ceramic powder material;
- rolling said ceramic powder material such as to obtain agglomerates of said ceramic powder material;
- applying a mechanical action to said ceramic powder material during said rolling,;
**characterised in that**:
said wetting comprising wetting up to a humidity value that is not greater than 11.5% humidity;
said rolling and said applying a mechanical action occur in such a manner as to control the disaggregation of at least a part of said agglomerates to obtain a desired disaggregation and limit a maximum size of granules forming from said agglomerates, said rolling comprising rotating an agglomeration chamber (3) of a mixing apparatus (1) around its longitudinal axis (X) in which said ceramic powder material (8) is present, said rotating said agglomerating chamber (3) occurring at a speed comprised between 15 rpm and 25 rpm; said applying a mechanical action comprising rotating a disaggregating element (7) provided inside said agglomeration chamber (3), said rotating said disaggregating element (7) occurring at a speed that is not less than 1500 rpm and said method further comprising
- supplying continuously said mixing apparatus (1) with said ceramic powder material and supplying continuously granules to the outlet (5) of said mixing apparatus (1) ;
- drying said granules up to a humidity value that is about the same as a compacting humidity value that is necessary for compacting by pressing said ceramic powder material to form said ceramic tile, said compacting humidity value being comprised between 3% and 8%.

2. Method according to claim 1, wherein said rolling and said applying a mechanical action occur for a preset time that is sufficient for obtaining a granulometric distribution of said ceramic powder material that is such that a fraction in weight of at least 16% of said ceramic powder material comprises granules having a dimension that is greater than 63 µm and less or the same as 125 µm.

3. Method according to claim 2, wherein said fraction in weight is not greater than 42% of said ceramic powder material.

4. Method according to claim 3, wherein said granulometric distribution further comprises a further fraction in weight that is variable between 14% and 30% of granules that have dimensions that are greater than 125 µm and less than or the same as 250 µm.

5. Method according to claim 3, or 4, wherein said granulometric distribution further comprises a still further fraction in weight that is variable between 7% and 32% of granules that have dimensions that are greater than 250 µm and less than or the same as 500 µm.

6. Method according to any one of claims 3 to 5, wherein said granulometric distribution further comprises another fraction in weight that is variable between 0.5% and 20% of granules that have dimensions that are greater than 500 µm and less than or the same as 1000 µm.

7. Method according to any one of claims 3 to 6, wherein said granulometric distribution further comprises a still another fraction in weight between 5.0% and 43% of granules with dimensions less than or the same as 65 µm.

8. Method according to any preceding claim, wherein said wetting occurs by injecting a wetting fluid through nozzles at a pressure that is not less than 5 bar.

9. Method according to any preceding claim, wherein said ceramic powder material comprises powders selected on the basis of a recipe with which a ceramic tile is obtained that has water absorption of less than or the same as 3%, said water absorption being measured in accordance with standard ISO 10545-3.

## Patentansprüche

1. Verfahren zum Formen einer keramischen Fliese durch Pressen von vorbereitetem keramischem Pulvermaterial in einer Pressvorrichtung, wobei das keramische Pulvermaterial durch Trockenmahlen von keramischen Rohmaterialien erhalten wird, wobei die maximale Ausdehnung der Partikel des anf±nglichen keramischen Pulvermaterials geringer als 75 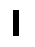 m ist, mit den folgenden Schritten:
- Befeuchten des keramischen Pulvermaterials;
- Walzen des keramischen Pulvermaterials derart, dass Agglomerate des keramischen Pulvermaterials erhalten werden;
- Anwenden einer mechanischen Aktion auf das keramische Pulvermaterial w±hrend des Walzens;
**dadurch gekennzeichnet, dass**:
das Befeuchten ein Befeuchten bis zu einem Feuchtewert umfasst, der nicht grØóer als 11,5% Feuchte ist;
das Walzen und das Anwenden einer mechanischen Aktion auf eine solche Weise auftreten, dass die Disaggregation von wenigstens einem Teil der Agglomerate kontrolliert werden, um eine gewænschte Disaggregation zu erhalten und um eine MaximalgrØóe von Granulen zu begrenzen, die sich aus den Agglomeraten bilden, wobei das Walzen das Drehen einer Agglomerationskammer (3) einer Mischvorrichtung (1) um ihre L±ngsachse (X) umfasst, in der das keramische Pulvermaterial (8) vorhanden ist, wobei das Drehen der Agglomerationskammer (3) bei einer Geschwindigkeit durchgefæhrt wird, die zwischen 15 U/min und 25 U/min liegt; wobei das Anwenden einer mechanischen Aktion das Drehen eines Disaggregierelementes (7) umfasst, das innerhalb der Agglomerationskammer (3) vorgesehen ist, wobei das Drehen des Disaggregierelementes (7) bei einer Geschwindigkeit durchgefæhrt wird, die nicht geringer als 1500 U/min ist, und wobei das Verfahren ferner Folgendes aufweist:
- das kontinuierliche Versorgen der Mischvorrichtung (1) mit dem keramischen Pulvermaterial und das kontinuierliche Zufæhren von Granulen zu dem Auslass (5) der Mischvorrichtung (1);
- das Trocknen der Granulen bis zu einem Feuchtewert, der ungef±hr der gleiche ist wie ein Feuchtewert zum Kompaktieren, der notwendig ist, um das keramische Pulvermaterial durch Pressen zu kompaktieren, um eine keramischen Fliese zu bilden, wobei der Feuchtewert zum Kompaktieren zwischen 3% und 8% liegt.

2. Verfahren nach Anspruch 1, bei dem das Walzen und das Anwenden einer mechanischen Aktion æber eine vorbestimmte Zeit erfolgen, die ausreichend ist, um eine Granulatverteilung des keramischen Pulvermaterials zu erhalten, die derart ist, dass ein Gewichtsanteil von wenigstens 16% des keramischen Pulvermaterials Granulen aufweist, die eine Ausdehnung haben, die grØóer als 63 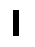 m und kleiner oder gleich 125 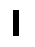 m ist.

3. Verfahren nach Anspruch 2, bei dem der Gewichtsanteil des keramischen Pulvermaterials nichtgrØóer als 42% ist.

4. Verfahren nach Anspruch 3, bei dem die Granulatverteilung ferner einen weiteren Gewichtsanteil aufweist, der zwischen 14% und 30% der Granulen variabel ist, die eine Ausdehnung aufweisen, die grØóer als 125 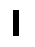 m und kleiner oder gleich 250 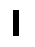 m ist

5. Verfahren nach Anspruch 3 oder 4, bei der die Granulatverteilung ferner noch einen weiteren Gewichtsanteil aufweist, der zwischen 7% und 32% der Granulen ver±nderbar ist, die eine Ausdehnung aufweisen, die grØóer als 250 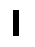 m und kleiner oder gleich 500 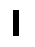 m ist.

6. Verfahren nach irgendeinem der Ansprache 3 bis 5, wobei die Granulatverteilung ferner einen weiteren Gewichtsanteil aufweist der zwischen 0,5% und 20% der Granulen variabel ist, die Ausdehnungen aufweisen, die grØóer als 500 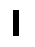 m und kleiner oder gleich 1000 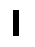 m sind.

7. Verfahren nach irgendeinem der Anspræche 3 bis 6, bei dem die Granulatverteilung ferner einen noch weiteren Gewichtsanteil zwischen 5% und 43% von Granulen enth±lt, deren Ausdehnung kleiner oder gleich 65 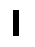 m ist.

8. Verfahren nach irgendeinem vorhergehenden Anspruch, bei dem das Befeuchten erfolgt, indem ein Fluid zum Befeuchten durch Dæsen bei einem Druck eingespritzt wird, der nicht geringer als 5 bar ist.

9. Verfahren nach irgendeinem vorhergehenden Anspruch, bei dem das keramische Pulvermaterial Pulver aufweist, die auf der Basis eines Rezeptes ausgew±hlt sind, mit dem eine keramische Fliese erhalten wird, so dass die Wasserabsorption kleiner oder gleich 3% ist, wobei die Wasserabsorption gem±ó dem Standard ISO 10545-3 gemessen wird.

## Revendications

1. Procédé pour former un carreau céramique en pressant une céramique en poudre préparée dans un appareil de pression, ladite céramique en poudre étant obtenue en broyant à sec des céramiques brutes, la dimension maximale des particules de ladite céramique en poudre initiale étant inférieure à 75 µm, comprenant les étapes de :
- mouiller ladite céramique en poudre ;
- laminer ladite céramique en poudre de telle manière à obtenir des agglomérats de ladite céramique en poudre ;
- appliquer une action mécanique à ladite céramique en poudre pendant ledit laminage ;
**caractérisé en ce que** :
ledit mouillage comprend le fait de mouiller jusqu'à une valeur d'humidité qui n'est pas supérieure à 11,5 % d'humidité ;
ledit laminage et ladite application d'une action mécanique se produisent de manière à contrôler la désagrégation d'au moins une partie desdits agglomérats pour obtenir une désagrégation désirée et limiter la taille maximale des granules qui se forment à partir desdits agglomérats, ledit laminage comprenant la rotation d'une chambre d'agglomération (3) d'un appareil de mélange (1) autour de son axe longitudinal (X), chambre dans laquelle ladite céramique en poudre (8) est présente, ladite rotation de ladite chambre d'agglomération (3) se produisant à une vitesse comprise entre 15 t/min et 25 t/min ; ladite application d'une action mécanique comprenant la rotation d'un élément de désagrégation (7) agencé à l'intérieur de ladite chambre de désagrégation (3), ladite rotation dudit élément de désagrégation (7) se produisant à une vitesse qui n'est pas inférieure à 1 500 t/min et ledit procédé comprenant en outre
- alimenter en continu ledit appareil de mélange (1) avec ladite céramique en poudre et fournir en continu des granules à la sortie (5) dudit appareil de mélange (1) ;
- sécher lesdits granules jusqu'à une valeur d'humidité qui est environ la même qu'une valeur d'humidité de compactage qui est nécessaire pour compacter en pressant ladite céramique en poudre pour former ledit carreau céramique, ladite valeur d'humidité de compactage étant comprise entre 3 % et 8 %.

2. Procédé selon la revendication 1, dans lequel ledit laminage et ladite application d'une action mécanique ont lieu pendant une durée préétablie qui est suffisante pour obtenir une distribution granulométrique de ladite céramique en poudre qui est telle qu'une fraction en poids d'au moins 16 % de ladite céramique en poudre comprend des granules ayant une dimension supérieure à 63 µm et inférieure ou égale à 125 µm.

3. Procédé selon la revendication 2, dans lequel ladite fraction en poids n'est pas supérieure à 42 % de ladite céramique en poudre.

4. Procédé selon la revendication 3, dans lequel ladite distribution granulométrique comprend en outre une fraction supplémentaire en poids variable entre 14 % et 30 % de granules de dimensions supérieures à 125 µm et inférieures ou égales à 250 µm.

5. Procédé selon la revendication 3 ou 4, dans lequel ladite distribution granulométrique comprend en outre encore une fraction supplémentaire en poids variable entre 7 % et 32 % de granules de dimensions supérieures à 250 µm et inférieures ou égales à 500 µm.

6. Procédé selon l'une quelconque des revendications 3 à 5, dans lequel ladite distribution granulométrique comprend en outre une autre fraction en poids variable entre 0,5 % et 20 % de granules de dimensions supérieures à 500 µm et inférieures ou égales à 1 000 µm.

7. Procédé selon l'une quelconque des revendications 3 à 6, dans lequel ladite distribution granulométrique comprend en outre encore une autre fraction en poids allant de 5,0 % à 43 % de granules avec des dimensions inférieures ou égales à 65 µm.

8. Procédé selon l'une quelconque des revendications précédentes, dans lequel ledit mouillage se produit en injectant un fluide de mouillage à travers des buses à une pression qui n'est pas inférieure à 5 bar.

9. Procédé selon l'une quelconque des revendications précédentes, dans lequel ladite céramique en poudre comprend des poudres choisies sur la base d'une recette avec laquelle un carreau céramique est obtenu qui a une absorption d'eau inférieure ou égale à 3 %, ladite absorption d'eau étant mesurée conformément à la norme ISO 10545-3.
